# EUROPÄISCHE PATENTANMELDUNG

(11) **EP 0 882 482 A2**
(43) Veröffentlichungstag der Anmeldung: **09.12.1998**
(21) Anmeldenummer: 98810513.6
(22) Anmeldetag: 04.06.1998
(51) Int. Cl.: B01D 5/00

(54) **Verfahren zum Trennen eines Gemisches, Vorrichtung zur Durchführung des Verfahrens und Verwendung der Vorrichtung**

(30) Priorität: 04.06.1997 CH 1339/97
(71) Anmelder: Kühni AG, 4123 Allschwil 2 (CH); Zentralschweizerisches Technikum Luzern, 6048 Horw (CH)
(72) Erfinder: Kaufmann, Stephan, 6052 Hergiswil (CH)
(74) Vertreter: Roshardt, Werner Alfred, Dipl.-Phys.

(57) **Zusammenfassung**

Das Verfahren dient zum Trennen eines strömenden Gemisches aus zwei Komponenten, von welchen die erste gasförmig und die zweite dampfförmig ist. Dem Gemisch wird ein erster Wärmestrom (Q1) entzogen, welcher sich aus mindestens der Kondensationswärme der zweiten Komponente und einem zweiten Wärmestrom (Q2) zusammensetzt. Der zweite Wärmestrom (Q2) wird dem Gemisch zwecks Verhinderung von Nebelbildung der dampfförmigen in der gasförmigen Komponente zugeführt, und zwar aufwandslos, d.h. ohne zusätzliche Heizvorrichtung und ohne zusätzliches Heizmedium ausser ggfs. Umgebungsatmosphäre, insbesondere Luft; vorzugsweise wird der zweite Wärmestrom der Kondensationszone aus dem Gemisch selbst zugeführt. Die Vorrichtung umfasst eine Kondensationszone, welche sowohl an eine Heizwand wie auch an eine Kühlwand grenzt. Jenseits der Kühlwand befindet sich eine Kühlmittelzone mit einem Kühlmedium, jenseits der Heizwand eine Warmzone, in welcher die Temperatur höher ist als in der Kondensationszone. In der Warmzone befindet sich kein zusätzliches Heizmedium ausser ggfs. Umgebungsatmosphäre; vorzugsweise ist die Warmzone eine der Kondensationszone vorgeschaltete, vom Gemisch durchströmte Zone. Die Vorrichtung bzw. das Verfahren eignen sich besonders zur Trennung von Gasen wie Luft oder Stickstoff einerseits und von Lösungsmitteln anderseits.

## Beschreibung

Gegenstand der Erfindung sind ein Verfahren nach dem Oberbegriff des Patentanspruchs **1**, eine Vorrichtung zur Durchführung des Verfahrens nach dem Oberbegriff des Patentanspruchs **8** sowie eine Verwendung dieser Vorrichtung nach dem Oberbegriff des Patentanspruchs **14**.

Im Bereich der Chemie bzw. der Verfahrenstechnik besteht häufig der Wunsch, Gemische aus mehreren Komponenten zu trennen, von denen eine erste Komponente unter den während der Durchführung der Trennung herrschenden Temperatur- und Druckbedingungen stets gasförmig bleibt, während eine zweite Komponente zu Beginn der Trennung dampfförmig ist; jede der Komponenten kann aus mehreren Stoffen bestehen. Mit der Trennung der Gemische werden verschiedene ökologische und ökonomische Zwecke verfolgt, wobei je nach Fall nur einer der Zwecke oder beide Zwecke als wesentlich betrachtet werden. Ein erster Zweck besteht darin, die erste Komponente, also das Gas oder ggfs. Gasgemisch vom Dampf zu reinigen; ein zweiter Zweck besteht darin, die zweite Komponente, die im Gas flüchtig wäre, zu rezyklieren, wobei sie sowohl aus Gründen der Prozessführung wie auch aus Gründen der Weiterverwertung im allgemeinen in flüssige Form gebracht wird. Als Beispiel für ein solches Verfahren sei lediglich die Rückgewinnung von Lösungsmitteln genannt, obwohl sich das Verfahren grundsätzlich für jede Trennung von Dampf/Gas-Gemischen eignet.

Zur Trennung des Gemisches bzw. Gemischstroms wird diesem ein erster Wärmestrom entzogen, die genügend gross ist, um die zweite Komponente zu kondensieren. Im allgemeinen wird angestrebt, dass sich das dabei gebildete Kondensat der zweiten Komponente an einer Kühlfläche niederschlägt, von wo es sich beispielsweise in einem Gefäss sammelt. Es wurde schon vor längerer Zeit erkannt, dass es mit diesem Verfahren nicht möglich ist, eine vollständige oder auch nur hinreichende Trennung des Gemisches zu erzielen, und zwar aus folgendem Grund: die zweite Komponente schlägt sich nicht nur als Kondensat an der Kühlfläche nieder sondem es bilden sich im Gemisch kleine Flüssigkeitstropfen, so dass ein Nebel entsteht, dessen Zustandekommen eine gewisse Übersättigung voraussetzt und durch homogen und/oder heterogen entstandene Kondensationskeime ausgelöst wird. Die Nebelpartikel bzw. Flüssigkeitstropfen sind dabei so fein, dass sie nicht abgeschieden sondem vom Gasstrom weitergetragen werden und die daher auch als Aerosole bezeichnet werden. Dadurch werden sowohl der Effekt der Reinigung der ersten Komponente wie auch der Rückgewinnung der zweiten Komponente nur teilweise erreicht. Um diese Nachteile zu vermeiden, wird oft versucht, die Nebelpartikel mittels Filtern aus dem Gasstrom herauszufiltern, was sich aber aus verschiedenen Gründen als problematisch erweist.

Es wurde daher versucht, die Nebelbildung zu verhindem, indem man dem Gemisch bzw. Gemischstrom einen geringen Wärmestrom zuführt, der im allgemeinen wesentlich kleiner ist als der zur Kondensation der zweiten Komponente entzogene erste Wärmestrom, mit dem Ziel, die Bildung von Nebel zu vermeiden ohne gleichzeitig die Kondensation zu verhindern. Die Zufuhr des Wärmestroms erfolgt dabei durch eine leichte Beheizung des Gemisches.

Obwohl diese Methode prinzipiell bezüglich der Vermeidung der Entstehung von Nebel ohne Behinderung oder Verhinderung der angestrebten Kondensation erfolgreich ist, ist ihre Durchführung aus praktischen Gründen mit zahlreichen Nachteilen behaftet.

Eine früher vorgeschlagene elektrische Beheizung des Gemisches, beispielsweise mittels einer Heizdrahtvorrichtung, ist in all denen Fällen nicht zulässig, in denen Exposionsgefahr besteht. Eine Beheizung des Gemischs mittels eines separaten Heizmediums, wie sie seit längerem aus der **SU-A-1152605** bekannt ist, ist in apparativer Hinsicht aufwendig, und grundsätzlich verursacht die zuzuführende Wärme in energetischer Hinsicht einen zusätzlichen Aufwand.

Die erste Aufgabe der Erfindung wird daher dann gesehen, ein Verfahren der eingangs genannten Art vorzuschlagen, welches die erwähnten Nachteile vermeidet. Die zweite Aufgabe der Erfindung besteht darin, eine Vorrichtung der eingangs genannten Art zu schaffen, die zur Durchführung des erfindungsgemässen Verfahrens eingesetzt werden kann. Die dritte Aufgabe betrifft die Verwendung der neuen Vorrichtung.

Die Lösungen dieser Aufgaben erfolgen nach den Merkmalen der kennzeichnenden Teile der unabhängigen Patentansprüche **1** bzw. **8** bzw. **14**. Vorteilhafte Weiterbildungen und bevorzugte Beispiele sind durch die jeweiligen abhängigen Patentansprüche definiert.

Nach dem erfindungsgemässen Verfahren kann also der zur Verhinderung der Nebelbildung erforderliche Wärmestrom so zugeführt werden, dass kein Aufwand für ein Heizmedium betrieben werden muss; darunter ist zu verstehen, dass zur Wärmezufuhr kein zusätzlicher Energieträger und kein zusätzlicher Energieaufwand benötigt wird, wobei im Rahmen der vorliegenden Erfindung die Umgebungsatmosphäre bzw. Umgebungsluft nicht als zusätzliches Heizmedium bzw. als zusätzlicher Energieträger betrachtet wird.

Bei einer einfachen Variante des Verfahrens nach der Erfindung stammt der erforderliche Wärmestrom, der dem Gemisch zugeführt wird, aus der Umgebung. Dies bedingt natürlich, dass die Temperatur der Kondensationszone unter der Umgebungstemperatur liegt.

Bei einer zweiten Variante des Verfahrens nach der Erfindung ist zwar konstruktiv eine Warmzone abgegrenzt, welche vom umgebenden Medium, im allgemeinen Luft, durchströmt wird, so dass auch hier keine eigentliches zusätzliches Heizmedium, dessen Bereitstellung einen gewissen Aufwand erfordem würde, erforderlich ist.

Bei einer besonders bevorzugten, dritten Variante des Verfahrens, die auch dann durchgeführt werden kann, wenn die Umgebungstemperatur tiefer ist als die Temperatur der Kondensationszone, wird das Gemisch selbst als Träger der zuzuführenden Wärme benutzt; das Gemisch weist zu Beginn des Verfahrens eine Temperatur auf, die über der Temperatur der Kondensationszone liegt. Ein Teil der vom zuströmenden Gemisch konvektiv beigebrachten Wärme wird nach der Erfindung an das bereits abgekühlte Gemisch abgegeben, welches dadurch beheizt wird.

Besonders vorteilhaft ist, dass auf diese Weise eine selbsttätige Regelung für die Wärmezufuhr zur Kondensationszone zustande kommt. Wird nämlich der Massenstrom bzw. die zeitliche Menge des Gemisches erhöht, so erhöht sich auch deren Enthalpiestrom; dadurch kann der benötigte, jetzt grössere zweite Wärmestrom aus der Warmzone an die Kondensationszone abgegeben werden, die erforderlich ist, um das in der Kondensationszone befindliche Gemisch zu beheizen.

Die erfindungsgemässe Vorrichtung weist einen Strömungskanal bzw. eine Folge von Strömungsquerschnitten auf, welche vom Gemisch durchströmt wird und sowohl von einer Kühlwand und wie auch von einer Heizwand begrenzt ist, so dass mindestens eine Kondensationszone für das Gemisch entsteht. Jenseits der Kühlwand befindet sich eine Kühlmittelzone, welche von einem geeigneten Kühlmedium durchströmt wird. Jenseits der Heizwand befindet sich eine Warmzone, in welcher eine höhere Temperatur herrscht als im in der Kondensationszone befindlichen Gemisch. Die Kühlwand weist eine der Kondensationszone zugewandte Kühlfläche auf, an welcher sich der im Gemisch vorhandene, bereits kondensierte Dampf als Kondensat niederschlägt. Die Heizwand weist eine der Kondensationszone zugewandte Heizfläche auf, an welcher sich das Gemisch erwärmt. Erfindungsgemäss ist die Warmzone heizmittelfrei, worunter zu verstehen ist, dass kein zusätzliches Heizmittel bzw. kein zusätzlicher Energieträger - mit Aussnahme ggfs. von Umgebungsatmosphäre - erforderlich ist, da der zweite Wärmestrom, mit welchem das Gemisch beheizt wird, auf andere Weise zugeführt wird. Dadurch werden, wie angestrebt, der apparative Aufbau der Vorrichtung an und für sich und der Installationsaufwand um die Vorrichtung stark vereinfacht.

An dieser Stelle sei darauf hingewiesen, dass die Begriffe 'Warmzone', 'Heizfläche', 'Kühlmittel' und 'Kühlmittelzone' nicht für Temperaturen im Bereich von Wohntemperaturen zu verstehen sind sondern lediglich relative Angaben darstellen.

Bei einer einfachen Ausführungsform der erfindungsgemässen Vorrichtung wird die Warmzone durch die Umgebung gebildet, was, wie weiter oben erwähnt, nur dann möglich ist, wenn die Temperatur in der Kondensationszone tiefer ist als die Umgebungstemperatur. Die Heizwand bildet also in diesem Fall die Aussenwand der Einrichtung; da sie den Wärmedurchgang erlauben muss, kann - was ein weiterer konstruktiver Vorteil ist - auf jede Isolation verzichtet werden.

Bei einer zweiten Ausführungsform der erfindungsgemässen Vorrichtung ist zwar konstruktiv eine Warmzone abgegrenzt; durch diese strömt aber nicht ein eigentliches zusätzliches Heizmedium, das speziell zugebracht werden müsste, sondem lediglich das die Vorrichtung ohnehin umgebende Medium, im allgemeinen also die Umgebungsluft.

Im Sinne einer theoretisch korrekten thermodynamischen Betrachtungsweise muss allerdings gesagt werden, dass bei den beiden soeben beschriebenen Ausführungsformen der erfindungsgemässen Vorrichtung dennoch ein Heizmedium, nämlich die Umgebungsluft, zur Wärmezufuhr benutzt wird. Zwar sind dafür keine aufwendigen Anschlüsse und Rohrleitungen innerhalb der Einrichtung erforderlich, im Gegenteil vereinfacht - wie schon erwähnt - der Wegfall der Isolation die Konstruktion; es ist aber zu beachten, dass der Umgebung Wärme entzogen wird, was ggfs. eine vermehrte Raumheizung bedingt.

Bei einer weiteren Ausführungsform der erfindungsgemässen Vorrichtung wird die Warmzone durch eine vom Gemisch selbst durchströmte Zone gebildet. Das Gemisch strömt dabei durch die Warmzone, gibt dort über die Heizwand Wärme, genauer den zweiten Wärmestrom, an das bereits in der Kondensationszone befindliche Gemisch ab, kühlt sich dabei etwas ab, und gelangt dann in die Kondensationszone. In der Kondensationszone gibt das Gemisch durch die Kühlwand Wärme, nämlich den ersten Wärmestrom, an das Kühlmedium ab, wodurch es sich abkühlt, so dass die zweite Komponente sich nach und nach als Kondensat an der Kühlfläche niederschlägt. Anderseits gelangt Wärme, nämlich der bereits erwähnte zweite Wärmestrom, der geringer ist als der erste Wärmestrom, vom nun in der Warmzone befindlichen Gemisch durch die Heizwand in das Gemisch der Kondensationszone und beheizt dieses. Auch bei dieser Ausbildung wird kein zusätzlichs Heizmedium, nicht einmal Umgebungsluft, benötigt. Die Zufuhr des zweiten Wärmestroms zur Warmzone, nicht aber zur Kondensationszone, erfolgt also konvektiv bzw. in regenerativer Weise, nämlich durch das Gemisch selbst. Dadurch wird nicht nur das in den Kondensationszone befindliche Gemisch geheizt sondem auch das in der Warmzone befindliche Gemisch vorgekühlt.

Die Vorrichtung kann so ausgebildet sein, dass die Strömungsquerschnitte der Kondensationszone simultan oder altemativ die Kühlwand und die Heizwand berühren. im ersten Fall erfolgt gleichzeitig mit der Kondensation die Beheizung des Gemisches, im zweiten Fall erfolgen Kondensation und Beheizung abwechselnd bzw. sequentiell. Es ist auch möglich, eine dauemde Kühlung und eine sequentielle Kühlung vorzusehen.

Obwohl das erfindungsgemässe Verfahren auch in einem Chargenbetrieb durchgeführt werden könnte, erfolgt es im allgemeinen kontinuierlich in einer Vorrichtung, die im Prinzip eine Art 'doppelter' Wärmetauscher ist. Der Übergang des ersten Wärmestroms erfolgt jeweils aus der Kondensationszone an die Kühlmittelzone und der Übergang des zweiten Wärmestroms erfolgt aus der Warmzone an die Kondensationszone. Während aber bei den beiden zuerst beschriebenen Ausführungsformen der erfindungsgemässen Vorrichtung drei Medien, nämlich Umgebungsatmosphäre, Gemisch und Kühlmedium, vorhanden sind, sind bei der zuletzt genannten Ausführungsform der erfindungsgemässen Vorrichtung nur zwei Medien im Spiel, nämlich das Gemisch und das Kühlmittel. Die Strömungskanäle, welche die Warmzone, die Kondensationszone und die Kühlmittelzone bilden, können - wie die Strömungskanäle von Wärmetauschem - relativ zueinander im Gleichstrom und/oder im Querstrom und/oder im Gegenstrom verlaufen. Alle dem Fachmann für Wärmetauscher bekannten Erkenntnisse und Konstruktionsvarianten sind sinngemäss auch für die erfindungsgemässe Vorrichtung gültig.

Der Kondensationszone kann nach der Kondensation der zweiten Komponente weiterhin Wärme entzogen werden, so dass die zweite Komponente an der Kühlfläche in den festen Zustand übergeht.

Das erfindungsgemässe Verfahren bzw. die erfindungsgemässe Vorrichtung werden vorzugsweise zur Rückgewinnung von Lösungsmitteln aus Gasen benutzt. Bei besonders häufigen Verfahren ist die erste Komponente Luft oder Stickstoff und die zweite Komponente eine übliches Lösungsmittel.

Im folgenden wird die Erfindung anhand von schematischen Darstellungen sowie von Ausführungsbeispielen der erfindungsgemässen Vorrichtung und mit Bezug auf die Zeichnung näher erläutert Es zeigt
- **Fig. 1**: Ein Enthalpiestrom/Massenstrom-Verhältnis-Diagramm zur Erläuterung des durch die Erfindung gelösten Problems;
- **Fig. 2**: Die Wärme- bzw. Enthalpieströme übergänge des erfindungsgemässen Verfahrens, in schematischer Darstellung;
- **Fig. 3**: Eine schematische Darstellung der erfindungsgemässen Vorrichtung zur Erläuterung des erfindungsgemässen Verfahrens;
- **Fig. 4**: die Temperaturverläufe im Gemisch und im Kühlmittel bei der Durchführung des erfindungsgemässen Verfahrens;
- **Fig. 5**: eine erfindungsgemässen Vorrichtung, zur Durchführung des gemäss Fig. 2 und Fig. 4 dargestellten Verfahrens, in stark vereinfachter, schematischer Darstellung;
- **Fig. 6**: ein erstes Ausführungsbeispiel der erfindungsgemässen Vorrichtung;
- **Fig. 7A**: einen Schnitt längs der Linie X-X der Fig. 6;
- **Fig. 7B**: einen Schnitt längs der Linie Y-Y der Fig. 6;
- **Fig. 8**: ein zweites Ausführungsbeispiel der erfindungsgemässen Vorrichtung;
- **Fig. 9**: ein drittes Ausführungsbeispiel der erfindungsgemässen Vorrichtung; und
- **Fig. 10**: ein viertes Ausführungsbeispiel der erfindungsgemässen Vorrichtung; und
- **Fig. 11**: einen Schnitt längs der Linie Z-Z der Fig. 10.

Es sei hier erwähnt, dass das Verfahren üblicherweise kontinuierlich abläuft; selbst wenn in der folgenden Beschreibung und in der Zeichnung ggfs. von Wärmemengen, Enthalpien und Massen die Rede sein sollte, handelt es sich dabei um zeitliche Wärmemengen, also Wärmeströme, zeitliche Enthalpien, also Enthalpieströme und zeitliche Massen, also Massenströme, ohne dass dies stets ausdrücklich erwähnt oder durch über den Symbolen wie zum Beispiel Q und H angebrachte Punkte zum Ausdruck gebracht wird.

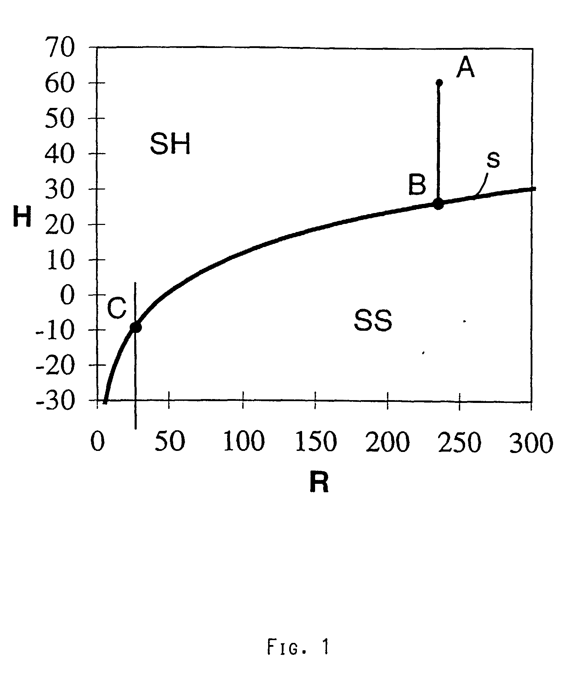

Das Diagramm gemäss **Fig. 1** gilt für ein Gemisch, wobei horizontal das Massenstrom-Verhältnis **R** der zweiten, zu verflüssigenden Komponente **II** in g zur ersten, also permanent gasförmigen Komponente **I** in kg aufgetragen ist, während vertikal der entsprechende Enthalpiestromstrom **H** in kJ/kg der ersten Komponente **I** aufgetragen ist. Die Kurve s ist die Sättigungslinie, welche die Zustände der Überhitzung **SH** von den Zuständen der Übersättigung **SS** trennt. Bekanntlich erfolgt gleichzeitig mit der Kondensation der zweiten Komponente eine Verminderung von **R**. Um die Bildung von unerwünschtem Nebel zu verhindern, muss der Prozess im Prinzip so geführt werden, dass die Linie **s** nicht unterschritten wird. Da aber durch die physikalischen Gesetzmässigkeiten des simultanen Stoff- und Wärmeüberganges der dem Gemisch entnommene und über die Kühlwand abgeführte Wärmestrom gekoppelt ist mit der gleichzeitig dem Gemisch entzogenen und an der Kühlwand niedergeschlagenen Stoffmenge der zweiten Komponente, gelangt man in den meisten Fällen in den Bereich **SS**, wo die Bildung von Nebel erfolgt. Um diese Nebelbildung zu verhindern, wird - kontinuierlich oder sequentiell - eine zweiter Wärmestrom zugeführt, welcher natürlich bedeutend kleiner ist als der theoretisch zur Kondensation der zweiten Komponente notwendige abzuführende Wärmestrom. Dieser zweite Wärmestrom muss schliesslich auch wieder abgeführt werden; der erste Wärmestrom, welcher insgesamt abgeführt wird, ist also die Summe des zweiten Wärmestroms und mindestens des zur Kondensation der zweiten Komponente II notwendigen Wärmestrom und der zweiten Wärmestrom. Bei einer optimalen aber im allgemeinen nur theoretisch erreichbaren Prozessführung gelangt man vom Anfangszustand **A** durch Vorkühlung des Gemisches in der Warmzone zum Zwischenzustand **B** und anschliessend zum Endzustand **C**, dessen Verhältnis **R** im allgemeinen vorgegeben ist und möglichst klein sein soll; dabei folgt man von **B** zu **C** möglichst der Linie **s**. Der Anfangszustand **A** kann auch auf oder in der Nähe der Linie **s** liegen. Ferner kann man bei der Abkühlung des Gemisches auch zu einem nicht dargestellten Zwischenzustand gelangen, der unterhalb der Linie **s** liegt, wobei Nebel auftreten kann, der durch die Beheizung aber wieder verdunstet, so dass der Endzustand **C** wieder auf oder über der Linie **s** liegt.

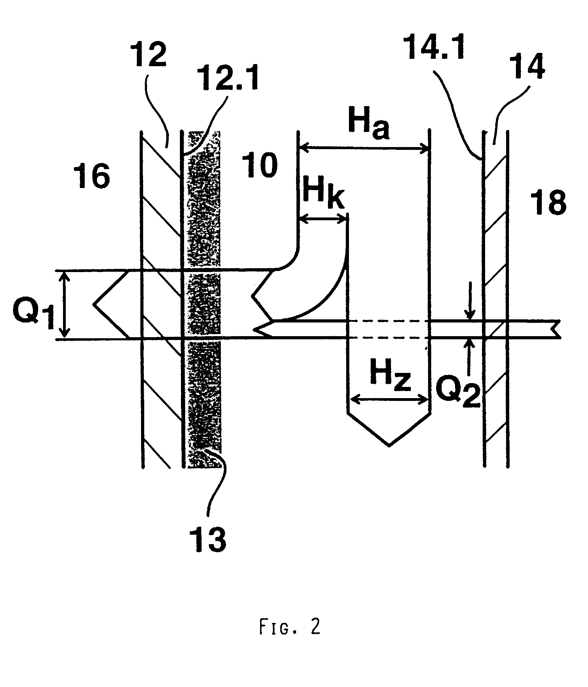

In **Fig. 2** sind vereinfacht und nicht massstäblich ein Strömungskanal für das Gemisch, der eine Kondensationszone **10** bildet, eine Kühlwand **12** mit einer Kondensationsfläche **12.1**, auf welcher sich ein Film von Kondensat **13** befindet, sowie eine Heizwand **14** mit einer Heizfläche **14.1** dargestellt. Die Kühlwand **12** trennt die Kondensationszone **10** von der Kühlmittelzone **16**, in welcher sich ein Kühlmedium befindet, und die Heizwand **14** trennt die Kondensationszone **10** von einer Warmzone **18**, in welcher die Temperatur höher ist als in der Kondensationszone **10**. Ein erster Wärmestrom **Q**_{**1**} geht aus der Kondensationszone **10** in die Kühlzone **16** über, und ein zweiter, wesentlich geringerer Wärmestrom **Q2** gelangt aus der Warmzone **18** in die Kondensationszone **10**. Das Gemisch führt anfänglich einen Enthalpiestrom **H**_{**a**}; bei der Kondensation der zweiten Komponente zum Kondensat **13** vermindert sich dieser Enthalpiestrom **H**_{**a**} um **H**_{**k**} auf **H**_{**z**}. wobei der dem Enthalpiestrom **H**_{**k**} entsprechende Wärmestrom durch die Kühlwand **12** an das Kühlmedium abgegeben wird. Gleichzeitig wird der Kondensationszone **10** der zweite Wärmestrom **Q**_{**2**} durch die Heizwand **14** zugeführt, der letztlich zusammen mit dem dem Enthalpiestrom **H**_{**k**} entsprechenden Wärmestrom den ersten, an die Kühlmittelzone **16** abgegebenen Wärmestrom **Q**_{**1**} bildet.

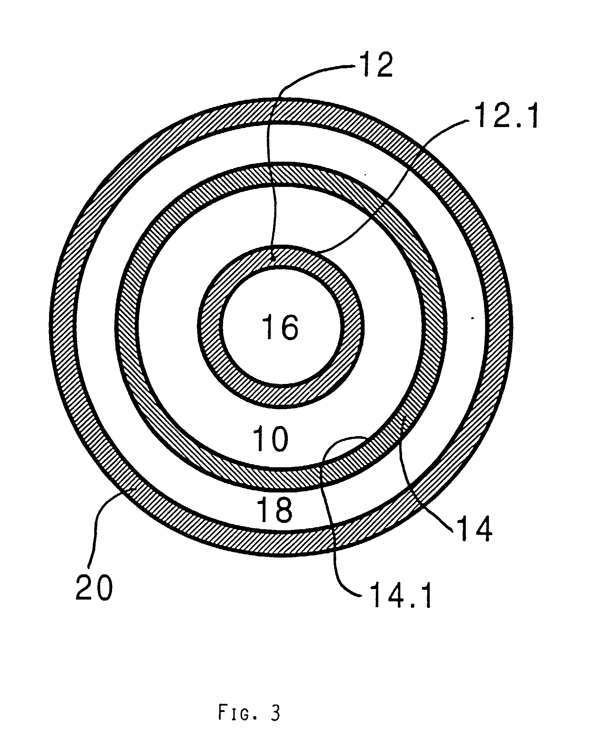

**Fig. 3** zeigt einen schematisierten Querschnitt durch ein stark vereinfachtes erstes Ausführungsbeispiel der erfindungsgemässen Vorrichtung, mit der vom zu trennenden Gemisch durchströmten Kondensationszone **10**, die von der Kühlwand **12** mit der der Kondensationszone **10** zugewandten Kondensationsfläche **12.1** sowie von der Heizwand **14** mit der der Kondensationszone **10** zugewandten Heizfläche **14.1** begrenzt ist. Innerhalb der Kühlwand **12** befindet sich die Kühlzone **16** mit dem Kühlmedium, und ausserhalb der Heizwand **14** befindet sich die Warmzone **18**, in welcher die Temperatur höher ist als in der Kondensationszone **10**. Die Warmzone **18** kann durch die Umgebung gebildet sein, wobei eine Aussenwandung **20** nicht erforderlich ist, oder ein der Kondensationszone **10** vorgeschalteter, vom Gemisch selbst durchströmter Abschnitt des gesamten Strömungskanals des Gemisches sein.

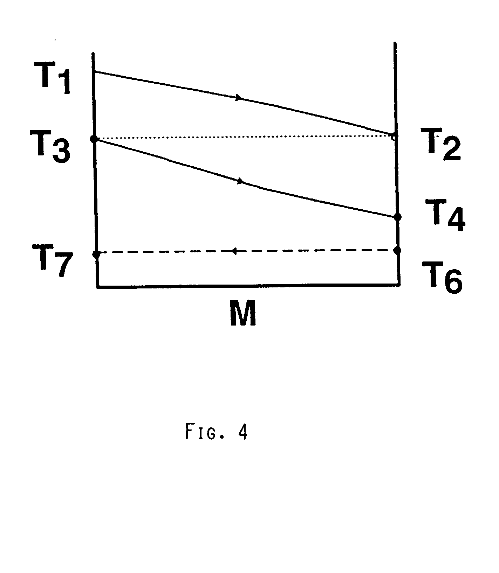

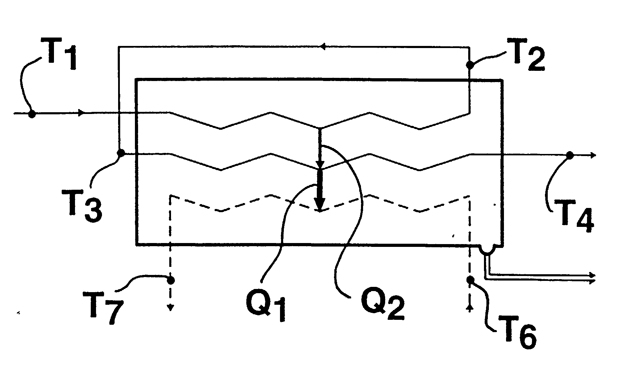

**Fig. 4** zeigt rein qualitativ den Temperaturverlauf im Wärmetauschbereich **M** einer erfindungsgemässen Vorrichtung gemäss **Fig. 5**. Das Gemisch bzw. die gereinigte erste Komponente sind schematisch mit ausgezogenen Linien, die kondensierte zweite Komponente mit Doppellinie und das Kühlmittel mit gestrichelten Linien dargestellt; die Strömungsrichtungen sind durch Pfeile angedeutet. Beim Eintritt, entsprechend dem Anfangszustand **A** gemäss **Fig. 1** weist das Gemisch die Temperatur **T**_{**1**} auf. Es wird dann, bevor es in die Kondensationszone gelangt, auf die Temperatur **T**_{**2**} entsprechend dem Zwischenzustand **B** der **Fig. 1** vorgekühlt, indem es den zweiten Wärmestrom **Q**_{**2**} an das in der Kondensationszone befindliche Gemisch abgibt. Das in der Kondensationszone befindliche Gemisch hat anfänglich die Temperatur **T**_{**3**}, welche der Temperatur **T**_{**2**} gleich ist; es nimmt den Wärmestrom **Q**_{**2**} auf, gleichzeitig wird ihm aber der Wärmestrom **Q**_{**1**}, umfassend mindestens die zeitliche Kondensationswärme für die zweite Komponente und den zugeführten zweiten Wärmestrom **Q**_{**2**}, entzogen, so dass die Kondensation der zweiten Komponente stattfindet, wobei die Temperatur auf **T**_{**4**} sinkt. Die Temperatur des Kühlmittels beträgt beim Eintritt **T**_{**6**} und beim Austritt **T**_{**7**}; dabei können **T**_{**6**} und **T**_{**7**} gleich sein.

Als Beispiel soll die Anwendung des erfindungsgemässen Verfahrens für die Trennung eines Gemisches aus Stickstoff als erster Komponente **I** und Methanol als zweiter Komponente **II** zahlenmässig erwähnt sein. Getrennt wurde ein Gemischstrom aus 850 kg/h Stickstoff und 200 kg/h Methanol, total also 1050 kg/h Gemisch. Das Verhältnis von Methanol zu Stickstoff betrug somit 0,235 kg Methanol/kg Stickstoff und das Verhältnis von Methanol zu Gemisch betrug 0,190 kg Methanol/kg Gemisch. Die Temperatur T₁ betrug 328 °K oder 55° C bei einem Eintrittsdruck von 1 bar. Die Kühlfläche betrug 28 Quadratmeter, und die Kühlmitteltemperaturen **T**_{**6**} und **T**_{**7**} 258° K bzw. -15° C. Mit Zwischentemperaturen von **T**_{**2**}, **T**_{**3**} von 299° K bzw. 26° C erhielt man schliesslich den gereinigten Stickstoff mit einer Restmenge Methanol, wobei das Verhältnis von Methanol zu Stickstoff noch 0,029 kg Methanol/kg Stickstoff betrug, was einer Reinheit des Stickstoffes von 97,2 % entspricht. Die Temperatur **T4** betrug 276° K, also 3° C. Der zweite Wärmestrom **Q**_{**2**} durch die Heizwand betrug 12,9 kW und der erste Wärmestrom **Q**_{**1**} durch die Kühlwand betrug 69,5 kW. Zum Vergleich sei festgehalten, dass bei der Durchführung des gleichen Verfahrens mit denselben Anfangsprodukten und denselben Anfangs- und Endtemperaturen, jedoch ohne Beheizung des Gemisches, im angeblich gereinigten Stickstoff ein beträchtlich grösserer Anteil Methanol verblieben war, wobei das Verhältnis von Methanol zu Stickstoff 0,065 kg/Methanol/kg Stickstoff betrug, was einer Reinheit des Stickstoffes von nur 93,9 % entspricht.

Zur Durchführung des Verfahrens nach der Erfindung eignen sich die im folgenden mit Bezug auf **Fig. 6** bis **Fig. 11** beschriebenen Vorrichtungen.

Das in **Fig. 6** dargestellte Ausführungsbeispiel der erfindungsgemässen Vorrichtung umfasst einen Behälter **100**, in welchem der Wärmeaustauschbereich **M** angeordnet ist. Der Behälter **100** weist einen Einlass **102** für das warme Gemisch, einen Auslass **104** für das durch Abgabe der Wärmestrom **Q**_{**2**} vorgekühlte Gemisch, einen Einlass **106** für dieses vorgekühlte Gemisch, einen Auslass **108** für die gereinigte erste Komponente, einen Auslass **110** für die kondensierte zweite Komponente sowie einen Einlass **112** und einen Auslass **114** für das Kühlmittel auf. Die Strömungsrichtungen sind jeweils durch Pfeile angedeutet. Im Behälter sind im weiteren Schikanen **116** angeordnet, durch welche zwecks Verbesserung des Wärmeüberganges ein Parallelstrom, das heisst ein Gleichstrom oder Gegenstrom, örtlich zu einem Querstrom abgelenkt wird.

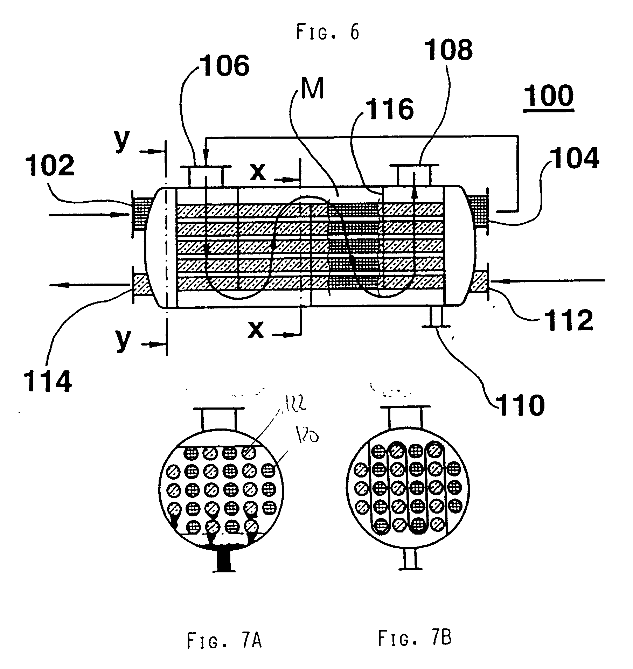

Die **Fig. 7A** und **7B** zeigen Querschnitte durch den Behälter **100**, mit Heizrohren **120** und Kühlrohren **122**, wobei die Heizrohre **120** eine karierte und die Kühlrohre **122** eine normale Schraffur aufweisen. Als Heizrohre **120** werden jene Rohre bezeichnet, die die Kondensationszone beheizen, also die Rohre zwischen dem Einlass **106** und dem Auslass **108**, und als Kühlrohre **122** werden diejenigen Rohre bezeichnet, welche die Kondensationszone kühlen, das heisst die das Kühlmittel führenden Rohre. Aus den **Fig. 6, 7A** und **7B** ist ersichtlich, dass die Beheizung der Kondensationszone im Gleich/Querstrom und die Kühlung der Kondensationszone im Gegen/Querstrom erfolgt.

Bei einer nicht dargestellten, konstruktiv etwas einfacheren Variante der Ausführungsform gemäss **Fig. 6** kann eine interne Rückführung des Gemisches vom Ende der Warmzone zum Beginn der Kondensationszone vorgesehen sein, bei welcher der Auslass **104** und der Einlass **106** wegfallen. Entsprechend ist diese Variante auch bei anderen Ausführungsformen der erfindungsgemässen Vorrichtung möglich.

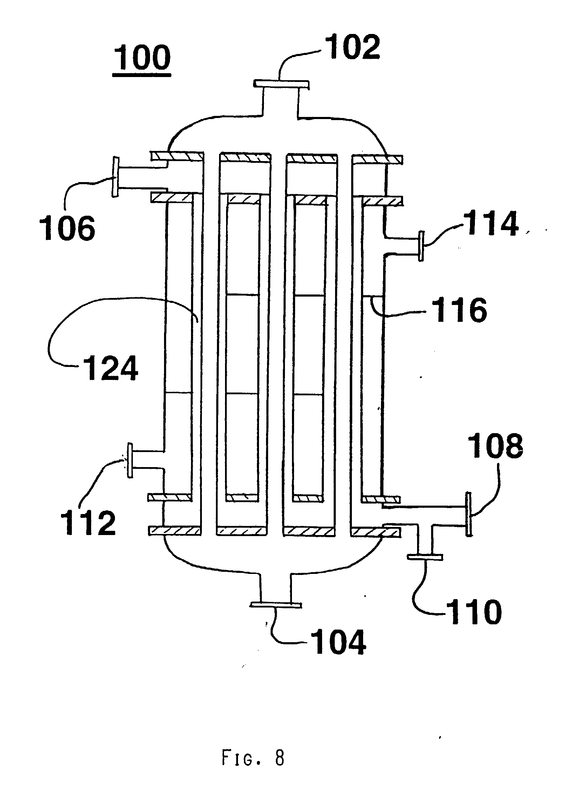

Fig. 8 zeigt ein zweites Ausführungsbeispiel der erfindungsgemässen Vorrichtung, das wie das Ausführungsbeispiel gemäss **Fig. 6** einen Behälter **100** umfasst. Der Behälter **100** weist einen Einlass **102** für das warme Gemisch, einen Auslass **104** für das durch Abgabe des zweiten Wärmestroms **Q**_{**2**} an die Kondensationszone **10** vorgekühlte Gemisch, einen Einlass **106** für dieses vorgekühlte Gemisch, einen Auslass **108** für die gereinigte erste Komponente, einen Auslass **110** für die kondensierte zweite Komponente sowie einen Einlass **112** und einen Auslass **114** für das Kühlmittel auf. Im Behälter sind im weiteren Schikanen **116** angeordnet. Bei dieser Ausführungsform erfolgt die Kondensation in Ringspalten **124**.

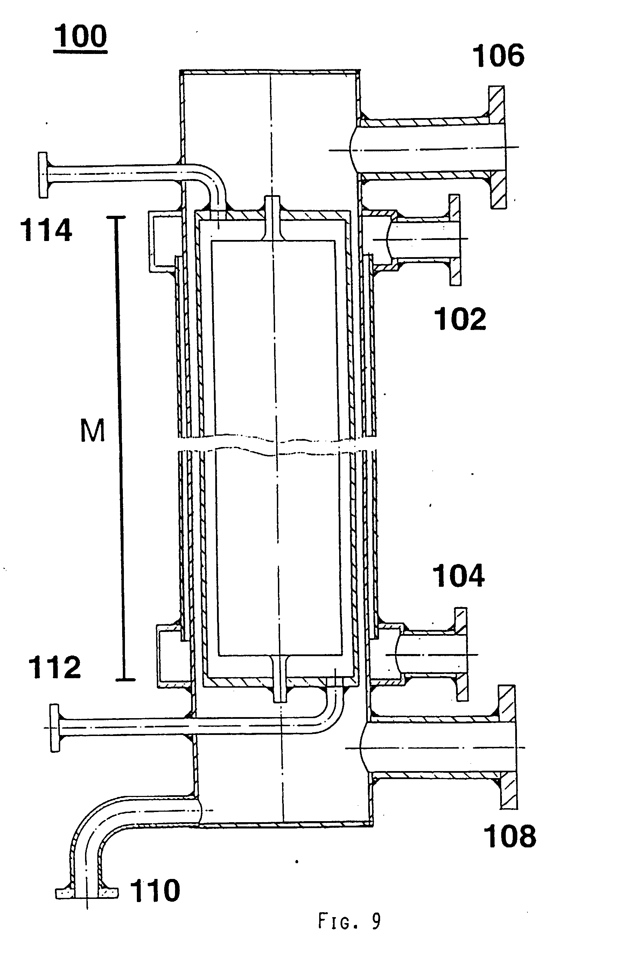

Ein drittes Ausführungsbeispiel der erfindungsgemässen Vorrichtung ist in **Fig. 9** dargestellt, ebenfalls mit einem Behälter **100**, umfassend einen Einlass **102** für das warme Gemisch, einen Auslass **104** für das durch Abgabe des Wärmestrom **Q**_{**2**} vorgekühlte Gemisch, einen Einlass **106** für dieses vorgekühlte Gemisch, einen Auslass **108** für die gereinigte erste Komponente, einen Auslass **110** für die kondensierte zweite Komponente, einen Einlass **112** und einen Auslass **114** für das Kühlmittel sowie eine Wärmeaustauschzone **M**. Der Einbau des Behälters **100** kann senkrecht mit untenliegendem Auslass **110** für das Kondensat unten oder waagrecht erfolgen, wobei dann eine Auslaufrinne für das Kondensat vorzusehen ist.

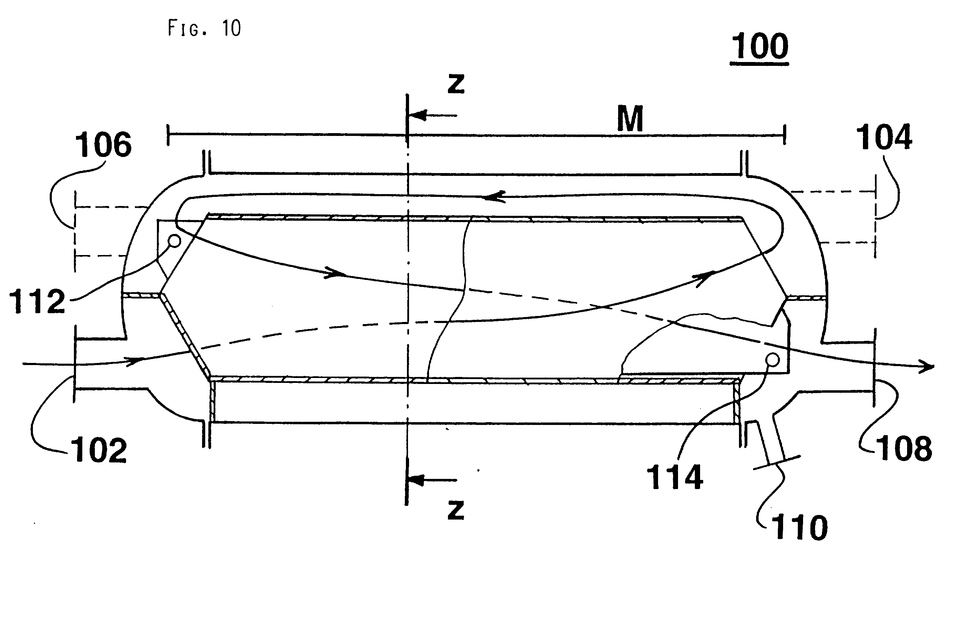

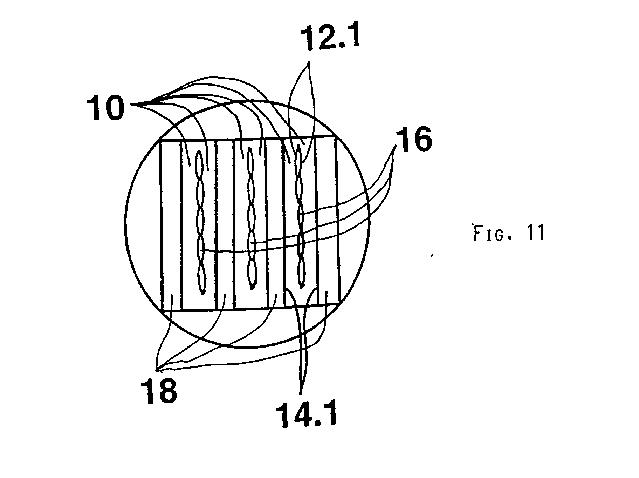

**Fig. 10** zeigt ein viertes Ausführungsbeispiel der erfindungsgemässen Vorrichtung. Dieses weist einen Behälter **100** auf, mit einem Einlass **102** für das warme Gemisch, einem Auslass **104** für das durch Abgabe der Wärmestrom **Q**_{**2**} vorgekühlte Gemisch, einem Einlass **106** für dieses vorgekühlte Gemisch, einem Auslass **108** für die gereinigte erste Komponente, einem Auslass **110** für die kondensierte zweite Komponente, einem Einlass **112** und einem Auslass **114** für das Kühlmittel sowie einer Wärmeaustauschzone **M**. Gemäss **Fig. 11** sind die Kondensationszone **10**, bzw. mehrere parallele Kondensationszonen, und die Warmzone **18**, bzw. mehrere parallele Warmzonen, durch ebene oder mindestens annähernd ebene beidseitige Heizwände voneinander getrennt, deren Heizflächen **14.1** den Kondensationszonen **10** zugewandt sind. Die Kühlmittelzone **16** bzw. insgesamt mehrere parallele Kühlmittelzonen befinden sich in den Kondensationszonen **10**, wobei die beidseitigen Kühlflächen **12.1** der Kühlmittelzonen den jeweiligen Kondensationszonen **10** zugewandt sind. Die Kühlmittelzonen werden durch zwei punktweise, beispielsweise durch erschweissung, sowie längs ihrer Ränder miteinander verbundene Bleche gebildet, wobei die Kühlwände bombiert sind.

Die neue Vorrichtung eignet sich besonders zum Trennen von Gemischen, bei welchen die erste Komponente ein Gas wie Stickstoff oder Luft und die zweite Komponente ein Lösungsmittel wie Methanol oder ein weiterer Alkohol, Dichlormethylen oder Trichlormethylen oder eine andere Chlorkohlenwasserstoffverbindung ist, wobei die obige Aufzählung nicht abschliessend ist.

Die beschriebenen Ausführungsbeispiele bilden nur eine kleine Auswahl der im Rahmen der Erfindung möglichen Realisationen der erfindungsgemässen Vorrichtung. Insbesondere können konstruktiv gleiche Vorrichtungen je nach den beim Verfahren Stoffen, Temperaturen, Drücken und Geschwindigkeiten sowohl auf Gleich- wie auch auf Gegenstrom geschaltet werden. Wesentlich ist lediglich, dass die Kondensation der zweiten Komponente und damit die Trennung der beiden Komponenten in hinreichendem Masse und unter Vermeidung oder Verminderung von Nebelbildung stattfindet, ohne dass zur dazu erforderlichen Wärmezufuhr ein zusätzliches Heizmedium, ausgenommen ggfs. Umgebungsluft - verwendet werden muss, was, wie angestrebt, sowohl konstruktiv wie energetisch einen bedeutenden Fortschritt gegenüber dem Stand der Technik darstellt.

## Patentansprüche

1. Verfahren zum Trennen eines Gemisches aus zwei Komponenten (**I, II**), von welchen die erste Komponente (**I**) gasförmig und die zweite Komponente (**II**) dampfförmig ist, wobei dem strömenden Gemisch ein erster Wärmestrom (**Q**_{**1**}) entzogen wird, welcher sich aus mindestens der zeitlichen Verdampfungswärme der zweiten Komponente (**II**) und einem dem Gemisch zugeführten zweiten Wärmestrom (**Q**_{**2**}) zusammensetzt, der die mindestens teilweise Verhinderung von Nebelbildung aus der zweiten Komponente (**II**) im Gemisch bezweckt,
**dadurch gekennzeichnet**,
dass der zweite Wärmestrom (**Q**_{**2**}) aufwandslos zugeführt wird.

2. Verfahren nach Patentanspruch **1**,
**dadurch gekennzeichnet**,
dass der zweite Wärmestrom (**Q**_{**2**}) aus der im wesentlichen ruhenden Umgebungsatmosphäre, insbesondere der Umgebungsluft, zugeführt wird.

3. Verfahren nach Patentanspruch **1**,
**dadurch gekennzeichnet**,
dass der zweite Wärmestrom (**Q**_{**2**}) aus der strömenden Umgebungsatmosphäre, insbesondere der Umgebungsluft, zugeführt wird.

4. Verfahren nach Patentanspruch **1**,
**dadurch gekennzeichnet**,
dass die zweite Wärmestrom (**Q**_{**2**}) regenerativ aus dem Gemisch zugeführt wird.

5. Verfahren nach Patentanspruch **1**,
**dadurch gekennzeichnet**,
dass die Abfuhr des ersten Wärmestroms (**Q**_{**1**}) und/oder die Zufuhr des zweiten Wärmestroms (**Q**_{**2**}) kontinuierlich oder sequentiell erfolgen.

6. Verfahren nach mindestens einem der Ansprüche **1** bis **5**,
**dadurch gekennzeichnet**,
dass die kondensierte zweite Komponente (**II**) durch Abgabe eines dritten Wärmestroms in ihren festen Zustand übergeht.

7. Verfahren nach mindestens einem der Patentansprüche **1** bis **6**,
**dadurch gekennzeichnet**,
dass es nach einer Massen-, Enthalpie- und Wärmestromkonfiguration durchgeführt wird, welche einer der für Wärmetauscher üblichen Massen-, Enthalpie- und Wärmestromkonfigurationen entsprechen.

8. Vorrichtung zum Trennen eines Gemisches aus zwei Komponenten (**I, II**), von welchen die erste gasförmig und die zweite dampfförmig ist, mit einer vom Gemisch durchströmten Kondensationszone (**10**), welche an eine Kühlwand (**12**) und an eine Heizwand (**14**) grenzt, wobei die Kühlwand (**12**) eine der Kondensationszone (**10**) zugewandte Kondensationsfläche (**12.1**) aufweist und die Kondensationszone (**10**) von einer von Kühlmittel mit tieferer Temperatur als die Kondensationszone (**10**) durchströmten Kühlmittelzone (**16**) trennt, und wobei die Heizwand (**14**) eine der Kondensationszone (**18**) zugewandte Heizfläche (**14.1**) aufweist und die Kondensationszone (**10**) von einer Warmzone (**18**) trennt, in welcher eine höhere Temperatur herrscht als in der Kondensationszone (**10**),
**dadurch gekennzeichnet**,
dass die Warmzone (**18**) von zusätzlichem Heizmedium frei ist.

9. Vorrichtung nach Patentanspruch **8**,
**dadurch gekennzeichnet**,
dass die Warmzone (**18**) die Umgebungsatmosphäre, insbesondere die im wesentlichen ruhende Umgebungsluft ist.

10. Vorrichtung nach Patentanspruch **8**,
**dadurch gekennzeichnet**,
dass die Warmzone (**18**) durch eine Wandung von der Umgebung getrennt und von Umgebungsatmosphäre, insbesondere Umgebungsluft, durchströmt ist.

11. Vorrichtung nach Patentanspruch **8**,
**dadurch gekennzeichnet**,
dass die Warmzone (**18**) eine vom Gemisch durchströmte, der Kondensationszone (**10**) vorgeschaltete Zone ist.

12. Vorrichtung nach mindestens einem der Patentansprüche **8** bis **11**,
**dadurch gekennzeichnet**,
dass jeder Strömungsquerschnitt des Gemisches simultan oder alternativ die Kühlwand (**12**) und die Heizwand (**14**) berührt, so dass die Wärmeabgabe aus der Kondensationszone (**10**) an die Kühlmittelzone (**16**) und/oder die Wärmezufuhr an die Kondensationszone (**10**) aus der Warmzone (**18**) simultan oder abwechselnd erfolgt.

13. Vorrichtung nach mindestens einem der Patentansprüche **7** bis **12**,
**dadurch gekennzeichnet**,
dass die die Warmzone (**18**), die Kondensatinszone (**10**) und die Kühlmittelzone (**16**) bildenden Strömungskanäle des Gemisches bzw. des Kühlmittels relativ zueinander im Gleichstrom und/oder im Gegenstrom und/oder im Querstrom verlaufen.

14. Verwendung der Vorrichtung nach einem der Patentansprüche **7** bis **12**,
**dadurch gekennzeichnet**,
dass die erste Komponente ein Gas, insbesondere Luft oder Stickstoff, und die zweite Komponente ein Lösungsmittel ist.
